# EUROPEAN PATENT SPECIFICATION

(11) **EP 2 569 737 B1**
(45) Date of publication and mention of the grant of the patent: **18.01.2017**
(21) Application number: 11727292.2
(22) Date of filing: 09.05.2011
(51) Int. Cl.: G06K 19/077, G06K 19/073

(54) **MEMORY CARD CARRIER, THE METHOD OF FIRST DATA STORAGE INTO THE MEMORY CARD**
SPEICHERKARTENTRÄGER, DAS VERFAHREN DER ERSTEN DATENSPEICHERUNG AUF DER SPEICHERKARTE
SUPPORT DE CARTE MÉMOIRE, PROCÉDÉ DE PREMIER STOCKAGE DE DONNÉES DANS LA CARTE MÉMOIRE

(30) Priority: 10.05.2010 SK 500202010
(43) Date of publication of application: 20.03.2013
(73) Proprietor: SMK Corporation, Tokyo 142-8511 (JP)
(72) Inventor: FLOREK, Miroslav, 821 01 Bratislava (SK); MASARYK, Michal, 821 01 Bratislava (SK)
(74) Representative: Porubcan, Róbert
(86) International application number: PCT/IB2011/052041
(87) International publication number: WO 2011/141864

(56) References cited:
- EP-A1- 1 622 066
- WO-A1-97/32280
- WO-A1-03/100720
- DE-A1- 4 407 173
- DE-A1- 19 606 789
- DE-U1- 29 819 389
- US-A1- 2002 190 364
- US-A1- 2010 012 721

## Description

### Technology

The solution refers to carriers of memory cards such as carriers of small memory cards - e.g. microSD or miniSD cards. The carrier ensures unification of the contact field that is used when loading data for the first time into the memory card, which will operate as an electronic payment device.

### Present technology

One purpose machine devices, which handle automatic manipulation with empty, unloaded payment cards, are being used during personalization of payment cards already for several years. These devices are usually of the credit card size in accordance with the ISO/IEC 7810 - 85,60 mm x 53,98 mm x 0,76 mm. These parameters became standard ones and are used even in case of other types of cards and therefore devices and one purpose machines are being developed and produced in such a way so they can process flat cards with the parameters given.

According to other solutions and inventions by the Logomotion s.r.o applicant, new payment devices in the form of removable memory cards will be introduced. These memory cards will offer new and comfortable possibilities of secure payments after they are inserted into the slot for amplificatory accessories of the mobile phone. On the basis of previous patent applications, various data and applications as are e.g. configuration data, payment terminal application, EMV (EuroPay MasterCard Visa) will have to be loaded to the removable memory card beforehand. This data loading step can take place outside production processes of the hardware itself since the payment card issuer wants to have this sensitive step fully under his control and in the same time he needs to react flexibly to the requests of new users.

New payment devices in the form of removable memory cards mentioned above will have, among other things, even a common contact interface e.g. with eight contacts according to the SD Card Association's standard. This contact interface will be used for data transmission and powering after the insertion of the card into the mobile phone's slot. During the personalization of the memory card to become a payment device, it is possible to ensure the data transmission using the aforementioned contacts of the contact interface; however in case of request for highly productive writing and processing, they would have to develop and produce a new, one purpose device that could work with this small card format - e.g. in case of the microSD card, the parameters are 15 mm x 11 mm x 1 mm.

The small size of microSD card also brings along the disadvantage of losing the card or its' sallying without notice during its' distribution or during manipulation by the user since the manipulation with a small card is difficult. Until now there did not exist any technical requirements on the improvement of the manipulation features since the effort to miniaturize the memory card presents the priority, a fact that is connected to the miniaturization of slots of cooperating devices. However in our case it can be presumed that after the removable memory card is delivered to the appropriate user, he will insert it into the corresponding slot in his mobile device and he will have no need of its removal, transfer or manipulation with it of any kind since this memory card will primarily fulfill the function of a payment device connected to the mobile phone and the function of transferring data into another device will be secondary, even though, naturally, this function will not be excluded.

Publication US2010012721 A1, which represents the state of the art, discloses a card system for contact payments. A card including a smart card interface may be inserted in a terminal such that an electrical connection is established. The smart card interface is connected through electrical connections to a smart card module in the transaction card.

Solution according to WO03100720 (A1) has a smaller chip card, which comprises a card body and a first contact area. An integrated circuit chip is physically and electrically connected to contacts of a second contact area, where the locations of contacts in the second contact area are different from locations of contacts in the first contact area.

Publication WO9732280 (A1) discloses an adapter which has a credit card format which comprises a first area for the insertion of the plug-in card and a second area for the connection of the adapter with the cellular telephone apparatus. The first and second areas are spatially separated from each other and electrically connected.

Solution according to DE4407173 (A1) uses an adaptor card, which has a container with a lid which locates the MiniSIM card. The use of the adaptor permits the use of a mini-SIM card in standard SIM devices.

The existing processes that reside in the fact that the small card is surrounded by a case of a bigger flat card (e.g. according to the FR 2817063, US 5936227, FR 2783948, DE 29819389U) as it is in case of e.g. Mini SIM (subscriber identity module) cards or Micro SIM cards cannot be used in this case since the contact interface of removable memory cards is of different shape and distribution - the same as in the case of a standard EMV chip with a contact field on the surface of a common payment card. The corresponding chip usually tends to be placed directly under the contact field. So, the usage of a bigger, flat card with removable part analogical to the possibilities, which are used in case of SIM cards, would not be solving the main problem with manipulation and data loading during the card's personalization.

### The subject matter of the invention

The deficiencies mentioned are to a great extend eliminated by a memory card carrier according to claim 1 and a method according to claim 7.

The subject matter of this invention lies in the fact that the carrier is of the flat card shape; the memory card in it is formed by a removable part that is intended to be snapped out from the body of the flat card; the memory card has its own contact interface intended for the establishment of the connection within the slot in the mobile communication device. Accessible contact filed is on the surface of the flat card. This contact field corresponds in size, distribution and placement to the ICC (integrated circuit card) card's contact field. The memory card is connected to the flat card's body over at least one connecting strip, which crosses the snap-out line. The important element of the carrier according to this solution is formed by a fact that it encompasses a conductive connection, which interconnects the flat card's contact field with the memory card's circuits. This is done in such a way that this conductive connection crosses the snap-out line. After the memory card is snapped out of the carrier's body this conductive connection in the snap-out line is interrupted.

From the simplicity of production point of view it will be suitable if the conductive connection crosses the snap-out line through a connection strip that holds the memory card in the flat card's body before it is snapped-out. This kind of strip with conductive connection can be located at the lateral side of the memory card, outside the contact interface zone, which is intended for the connection in the slot of the mobile communication device.

The carrier of the memory card will enable the memory card to be treated in way as if it was of parameters and characteristics of a standard, full-format ICC card with a contact field that corresponds to the existing standards. Due to that it will be possible to personalize and process memory cards on the same machines as are used for existing payment ICC cards.

The memory card's carrier flat body can be produced in the same step as the memory card's plastic body. Also the snap-out lines are created during this process. These are in the form of a drift that copies adjacent outer shape of the memory card. The drift can be interrupted by connection strips.

When being manipulated in the machines for the payment ICC cards' personalization, the chip located in the memory card's circuits, appears from the outside as if it was located under the payment ICC card's contact field. In reality, the reader in the machine for payment card processing establishes a contact with the contact field on the flat card's body surface and using conductive connection this contact field establishes a communication channel between the machine's reader and the chip on the memory card. The establishment of the conductive connection is basically only one-purpose one and temporary since the user does not need it for the payment device function after the payment card is snapped-out.

After the memory card is snapped out from the flat card's body, on the brim of the memory card there will be contacts or remnant parts of contacts that were formed by interruption of conductive connection. In order to prevent possible short-circuit or unwanted contact with the memory card's circuits, the memory card can be equipped with a conductive connection disconnecter , which is located on the conductive connection between the snap-out area and the memory card's circuit. This disconnecter can be in the form of various hardware and software switches. The disconnecter can be set in such a way so a command to definitively disconnect conductive connection is sent to the memory card after the last step is made by the ICC payment card processing machine. The disconnecter can be set also in a way, in which the conductive connection in interrupted when the memory card is inserted into the mobile communication device's slot for the first time, since at that point the memory card will definitely snapped out of the carrier's body. After that the fine remnants of the conductive connection contacts will not be active and powered.

Basically, the memory card can be located anywhere on the carrier's surface; however it should be placed in such a way so it would not infringe the flat card's contact field. Its placement does not have to be tied to the placement of the contact field as it is now - now there is the tendency to place the diminished element exactly to the same position as is the contact field. A configuration, in which it is not possible to diminish the diminished element to a smaller size then the contact field itself has, is the result of the existing compromise. This limitation disappears in configuration according to this invention. The memory card can be placed well inside the memory card's body surface, however it can also be near the brim or in the corner. The various placement possibilities are not dependant on the placement of contact fields directly; the placement possibilities make it easier to design the snap-out line and to dimension connection strips so one would not have exert strong force or special handiness to snap the memory card out. With this, we will also lower the risk of dangerous deformations or even the possibility of braking the memory card while removing it from the flat card's body.

Since the standard thickness of the microSD card is 1 mm, which is for approximately 0,24 mm more than the thickness of a standard plastic card, then during the manipulation in the payment ICC card personalization machine, there could come to a contact of trays with the payment card's contact interface. In order to prevent any damage, the memory card carrier can be equipped with a foil that covers at least the memory card's contact interface zone; the foil can also cover the entire surface of the flat card with exception of the flat card's contact field. Beside the isolating effect, the foil can also increase the implasticity of the connection between the carrier's body and the memory card itself. This foil can also have a protective function meaning that the user can check that the memory card's contact interface was not physically accessible before it was delivered to him. After the foil is drawn down, the memory card can be snapped out by using only a small force and by doing that the memory card's contact interface will become accessible. The foil can have a previously imprinted perforation so it would not be possible to stick the foil back to the card. In this way the solution increases the protection against undesirable loading of dangerous programs into the memory card that could occur during delivery to the user.

The foil can have changeable adhesion in various programmed zones so that the snap-out of the memory card is easier; a situation, which results in a condition where the force used to snap the card out is transferred from the fingers to selected lines in a way that guarantees suitable bending or shearing tension to the memory card's body.

### Pictures overview

The invention is explained in more detail on the figures 1 to 6.

On the figure 1 there is a carrier in the form of flat plastic card, where the memory card is located within the carrier's surface and it is connected to the carrier over three connection strips. The figure presents only one shape of many possible examples.

On the figure 2 we can see a schematic connection of conductive connection's disconnecter between the memory card's circuits and the contact field. On this figure there is a four-wire conductive connection, the number of wires can be different in the real realization.

On the figure 3 there is a memory card with the connection strip before and after the snap out. On the upper figure there is a four-wire conductive connection. On the lower figure there is the connection strip that is partly deformed by shear-pull tension. The arrow shows the direction of the memory card's snap out.

On the figure 4 there is the carrier, in which the memory card is located in the corner of the flat card. At the same time the orientation of the memory card can be various.

On the figure 5 there is an axonometric view of the carrier with accentuated cover foil in the original and even in the partially drawn back position. The shape of the memory card is traced by an interrupted line.

On the figure 6 there is an illustration of how the memory card is inserted into a mobile communication device, in this case the mobile phone. The illustration is not proportional and the aspect ratio of the memory card's and mobile communication device's size is chosen with the goal of increasing the figure's clarity.

### Realization examples

### Example 1

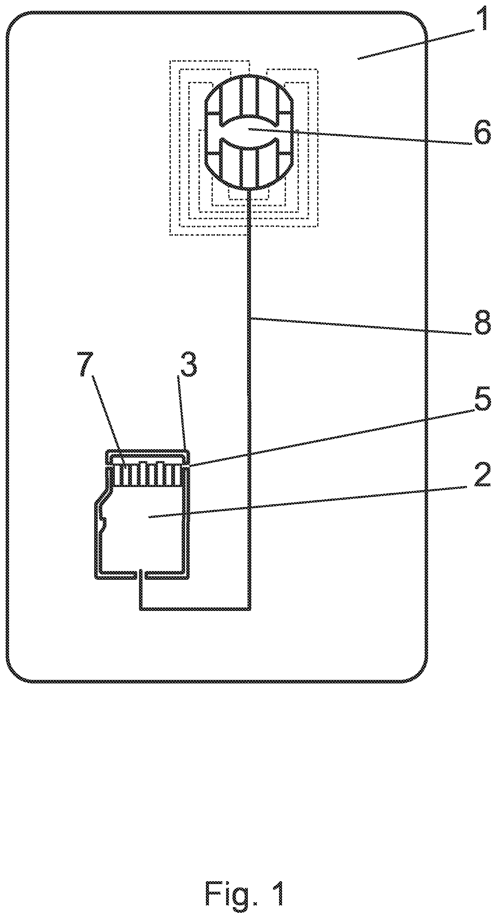

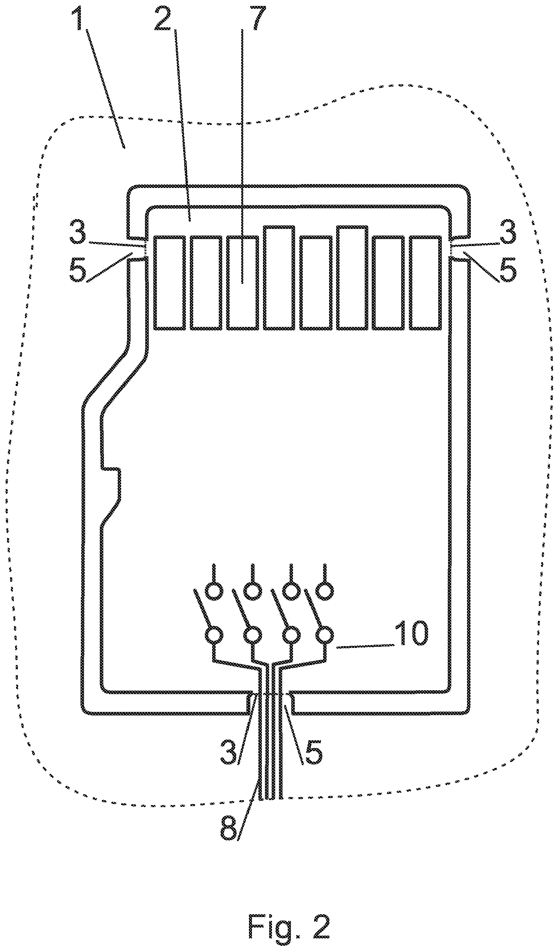

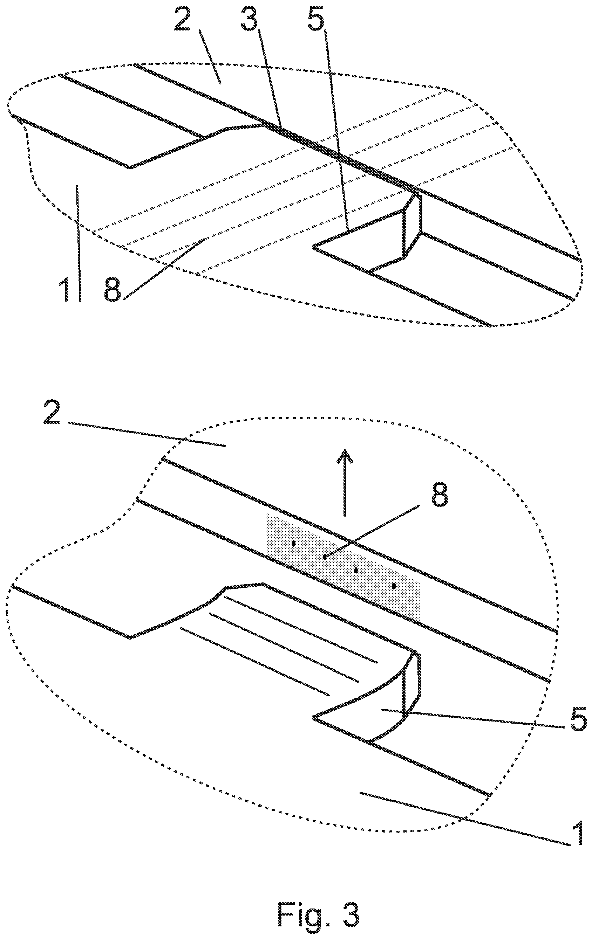

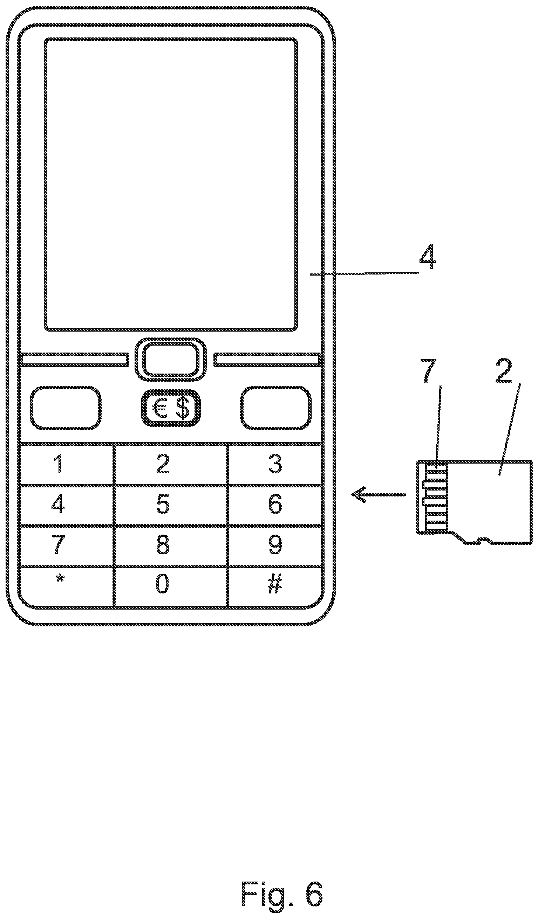

In this example according to the figures 1, 2, 3, 5, 6 a memory card carrier 2 is created in the form of a plastic flat card 1 of the ID-1 standard according to ISO / IEC 7810. The flat card 1 has a contact field 6 located on the upper surface. The contact field 6 has the same shape, location and also the number of contacts as a common plastic ICC card in this example according to the ISO / IEC 7816-2 standard.

The memory card 2 has the shape and parameters of a microSD card with eight contact interface's 7 contacts and parameters of approximately 15 mm x 11 mm x 1 mm. A body of this memory card 2 is created withing the body of the plastic flat card 1 carrier in such a way that it is located on the opposite side than the contact field 6 of the flat card 1 and the shape of the memory card's 2 borders is formed by a snap-out line 3 in the form of a narrow drift, which divides the memory card 2 from the flat card's 1 body. Three connection strips 5 cross the snap-out line 3, two of which are on the sides of the memory card 2 and one, the broader one, is on that side of the memory card 2 which is opposite to the side with the memory card's 2 contact interface 7.

A conductive connection 8 goes from the plastic flat card's 1 contact field 6 to the snap-out line 3, over which it passes over a broader connection strip 5 to the memory card's 2 rim. The conductive connection 8 is created in the memory card's 2 body by placing conductive layer before the memory card 2 is encased. The conductive connection 8 passes to a diconnecter 10 in the memory card's body 2. In this case the disconnecter 10 is formed by a semiconductor switch element. On the surface of the carrier there is a foil 9, which has a window 11 for the flat card's 1 contact field 6. The foil 9 is equipped with a sticking layer, which does not leave the surplus of the glue on the plastic surface and that is also equipped with a shaped imprint perforation 12, which brakes when the foil is being pulled down from the carrier's body plastic surface.

After it is produced and foil 10 is placed on it, the memory card's 2 carrier is personalized and processed in currently used machines for the procession of ICC payment cards. The memory card's 2 can be inserted in batches to the tray in the machine. The machine draws carriers using standard feeding units. In the machine the reader's contacts are applied to the contact field 6 on the plastic flat card's 1 surface and subsequently the transfer of data into the chip on the memory card 2 can take place. From the process and data structure point of view, this part of the process is similar to the processing way known until now. Moreover, the process can be supplemented for a step, in which a command is sent from the processing machine to the memory card 2 after the last check of correctness of previous operations. This command is evaluated in the memory card 2 as a command for the interruption of conductive connection 8. After this command, the memory card 2, using the disconnecter 10, interrupts the conductive connection 8 between the contact field 6 and the memory card 2. Due to this it is not possible to further use the flat card's 1 contact field 6 and the contact interface 7 of the memory card 2 itself is covered with a foil 9 until it is delivered to the user. The foil 9 has sufficient isolation impact so the connection between the individual contacts on the memory card 2 cannot be established.

After the carrier with the memory card 2 is delivered to the user, the user can see for himself that the one-time foil 9 has not been stripped from the surface of the plastic carrier's body. When stripping down the foil 9 in the direction marked by an arrow only a small force is exerted on the surface of the memory card 2; the intensity of the force can be set by a suitable selection of the foil's 9 adhesive features. After removing the foil 9 the memory card 2 is connected to the remaining part of the carrier's body only over three relatively small connection strips 5, where the snap-out force necessary to interrupt the connection strips 5 is considerably smaller than the force of allowed strain on the memory card's 2 body. The user snaps-out the memory card 2 from the memory card's 1 body and he can insert it into a slot of a mobile communication device 4. The programs and configuration data necessary for the run of the payment and possibly even of the payment terminal application are already loaded in the memory card 2.

### Example 2

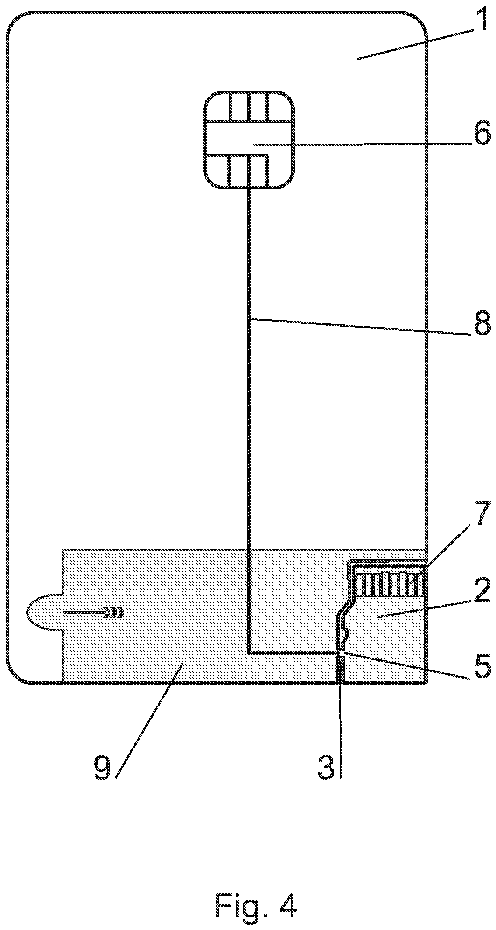

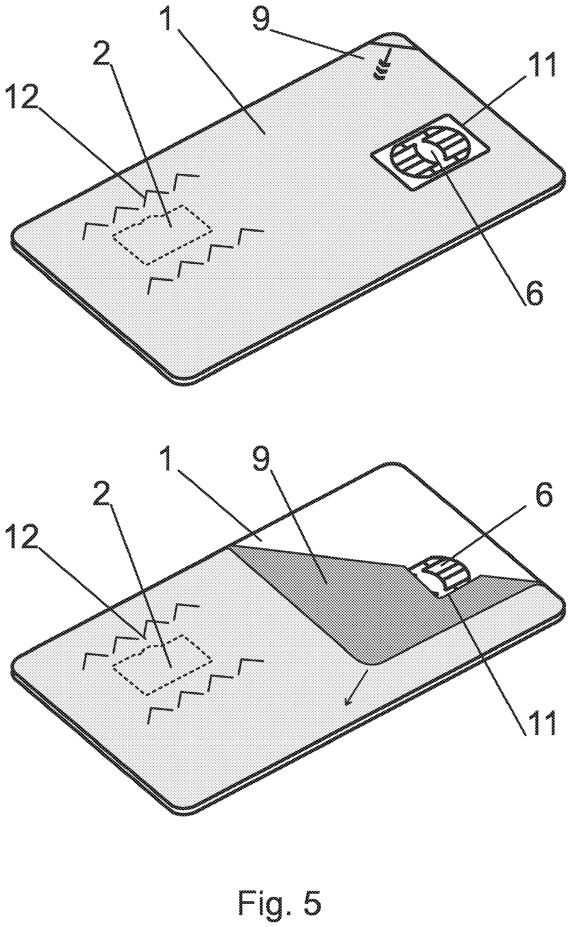

This example shown also on the figures 4 and 5 differs from the first one by the fact that the memory card 2 is located in the corner of the flat card 1. The snap-out line 3 is in the in the form of a drift, approximately of the shape of letter, and the memory card 2 is connected to the flat card's 1 body by one connection strip 5 over which there crosses even the conductive connection 8.

The carrier is equipped even with a foil 9, however in this case size of the foil 9 is selected in such a way so the foil 9 runs over part of the snap-out line 3 up to the memory card's 2 contact interface 7. The foil 9 does not cover the entire surface of the carrier. The foil 9 is equipped with non-sticking rim so it can be seized by fingers. After taking off the foil 9 the memory card 2 is snapped out only by bending one turning axis and by this even the conductive connection 8 is mechanically interrupted.

### Industrial usability

The industrial usability is obvious. According to this invention it is possible to repeatedly produce and use memory card carriers having standard card's shape and parameters. According to this solution it is possible to communicate with the memory card over a contact field that is in the form of existing standard for plastic payment cards.

### List of related symbols

- 1: - flat card
- 2: - memory card
- 3: - snap out line
- 4: - mobile communication device
- 5: - connective strip
- 6: - contact field
- 7: - contact interface
- 8: - conductive connection
- 9: - foil
- 10: - disconnecter
- 11: - window
- 12: - perforation

- EMV: - Europay MasterCard VISA
- ICC: - integrated circuit card
- SIM: - subscriber identity module

## Claims

1. A memory card carrier in the form of a flat card (1) with a temporarily attached memory card, where the flat card (1) has a contact field (6) that is accessible on the surface of the flat card (1);
and where the memory card (2) forms an element intended to be snapped out from the flat card's (1) body,
the memory card (2) has a contact interface (7) for the connection with a mobile communication device's (4) circuits,
and the memory card (2) is especially designed for payment applications with previously loaded data and/or programs
**is characterized by the fact** that
the memory card (2) is connected to the body of the flat card (1) over at least one connection strip (5) in the snap-out line (3),
the carrier encompasses a conductive connection (8), which connects the flat card's (1) contact field (6) to the memory card's (2) circuits while the conductive connection (8) crosses the snap-out line (3),
the conductive connection (8) passes through the connection strip (5),
the memory card (2) is equipped with a conductive connection (8) disconnecter (10), which is connected on the conductive connection (8) between the snap-out line (3) location and the memory card's (2) circuits.

2. A memory card carrier according to the claim 1 is **characterized by the fact**, that the connection strip (5) with conductive connection (8) is located outside of the edge that is adjacent to the contact interface (7).

3. A memory card carrier according to the claims 1 or 2 is **characterized by the fact** , that the contact field (6) corresponds to the standard integrated circuit card card's contact field by its location on the flat card (1) and by its layout of contacts.

4. A memory card carrier according to any of the claims 1 to 3 i s **characterized by the fact,** that it is equipped with a foil (9), which is placed to the side, on which there is the memory card's (2) contact interface (7), the foil (9) is placed in such a way so it covers the contact interface (7) and it is outside the flat card's (1) contact field (6).

5. A memory card carrier according to the claim 4 is **characterized by the fact**, that the foil (9) has a perforation (12) so the foil (9) could be at least partially broken when removed from the carrier's surface.

6. A memory card carrier according to the claims 4 or 5 is **characterized by the fact**, the foil (9) has a window (11) placed at the location of the contact field (6).

7. A method of first data storage into a memory card (2) by a data storage machine for storing data to the standard integrated circuit cards; especially the storage of payment application data where data are being stored using a machine that works with a flat card (1) with a contact field (6), where the contact field (6) is different from the memory card's (2) contact interface (7), **is characterized by the fact,** that
providing a memory card carrier as defined in any of the claims 1 to 6,
the machine drawing in the card carrier using standard feed units,
after the machine receives the flat card (1), the reader's contacts in machine are applied to the contact field (6),
and the memory card (2) is snapped out and/ or released out of the bigger flat card (1) after the data are stored and after the flat card (1) leaves the data storage device; preferably the memory card (2) is snapped out and/or released manually by the user of the memory card (2) before it is used for the first time.

8. A method of first data storage into a memory card (2) according to the claim 7 i s **characterized by the fact,** that in the last step of data procession in a machine, a command to end the conductive connection (8) using a disconnecter (10) is sent to the memory card (2).

9. A method of first data storage into a memory card (2) according to the claim 7 i s **characterized by the fact,** that the disonnecter (10) disconnects the conductive connection (8) after the first insertion of the memory card (2) into the slot of the mobile communication device (4).

## Patentansprüche

1. Ein Speicherkartenträger in Form einer flachen Karte (1) mit einer vorübergehend angebrachten Speicherkarte, wo die flache Karte (1) über ein Kontaktfeld (6) verfügt, das auf der Oberfläche der flachen Karte (1) zugänglich ist;
und wo die Speicherkarte (2) ein Element bildet, das aus dem Körper der flachen Karte (1) herausgeknickt werden soll,
die Speicherkarte (2) über eine Kontaktschnittstelle (7) für den Anschluss an die Schaltungen mobiler Kommunikationsgeräte (4) verfügt,
und die Speicherkarte (2) besonders für Zahlungsanwendungen mit zuvor geladenen Daten/Programmen entworfen ist
ist dadurch charakterisiert, dass
die Speicherkarte (2) mit dem Körper der flachen Karte (1) über mindestens einen Verbindungsstreifen (5) in der Linie des Herausknickens (3) verbunden ist,
der Träger eine leitende Verbindung (8) umfasst, die das Kontaktfeld (6) der flachen Karte (1) mit den Schaltungen der Speicherkarte (2) verbindet, während die leitende Verbindung (8) die Linie des Herausknickens (3) durchquert,
die leitende Verbindung (8) den Verbindungsstreifen (5) durchläuft,
die Speicherkarte (2) mit einem Trennschalter (10) der leitenden Verbindung (8) ausgestattet ist, der auf der der leitenden Verbindung (8) zwischen der Position der Linie des Herausknickens (3) und den Schaltungen der Speicherkarte (2) angeschlossen ist.

2. Ein Speicherkartenträger laut dem Anspruch 1 ist dadurch charakterisiert, dass der Verbindungsstreifen (5) mit der leitenden Verbindung (8) sich außerhalb des Randes befindet, der an die Kontaktschnittstelle (7) angrenzt.

3. Ein Speicherkartenträger laut den Ansprüchen 1 oder 2 ist dadurch charakterisiert, dass das Kontaktfeld (6) durch seine Lage auf der flachen Karte (1) und durch die Auslegung seiner Kontakte dem Kontaktefeld einer Standardkarte mit einem integrierten Schaltkreis entspricht.

4. Ein Speicherkartenträger laut jeglichem der Ansprüche 1 bis 3 ist dadurch charakterisiert, dass er mit einer Folie (9) ausgestattet ist, die zur Seite platziert ist, auf der sich die Kontaktschnittstelle (7) der Speicherkarte (2) befindet, die Folie (9) so platziert ist, dass sie die Kontaktschnittstelle (7) bedeckt und außerhalb des Kontaktfelds (6) der flachen Karte (1) ist.

5. Ein Speicherkartenträger laut dem Anspruch 4 ist dadurch charakterisiert, dass die Folie (9) eine Perforation (12) hat, damit die Folie (9) bei ihrer Entfernung aus der Oberfläche des Trägers mindestens teilweise gebrochen werden kann.

6. Ein Speicherkartenträger laut den Ansprüchen 4 oder 5 ist dadurch charakterisiert, dass die Folie (9) ein Fenster (11) hat, das auf der Lage des Kontaktfelds (6) platziert ist.

7. Eine Methode erstmaliger Datenspeicherung in eine Speicherkarte (2) mittels einer Datenspeicherungsmaschine zur Speicherung von Daten in Standardkarten mit einem integrierten Schaltkreis; besonders die Speicherung von Zahlungsanwendungsdaten, wo Daten mit Hilfe einer Maschine gespeichert werden, die mit einer flachen Karte (1) mit einem Kontaktfeld (6) arbeitet, wo sich das Kontaktfeld (6) von der Kontaktschnittstelle (7) der Speicherkarte (2) unterscheidet, ist dadurch charakterisiert, dass
im Falle eines Speicherkartenträgers, wie in jeglichem der Ansprüche 1 bis 6 definiert,
wenn die Maschine den Kartenträger mit Hilfe von Standardzuführungseinheiten einzieht,
nachdem die Maschine die flache Karte (1) empfängt, werden die Kontakte des Lesers in der Maschine auf das Kontaktfeld (6) aufgebracht,
und die Speicherkarte (2) wird aus der größeren flachen Karte (1) herausgeknickt und/oder gelöst, nachdem die Daten gespeichert werden und nachdem die flache Karte (1) das Datenspeicherungsgerät verlässt; die Speicherkarte (2) wird vorzugsweise manuell vom Benutzer der Speicherkarte (2) herausgeknickt und/oder gelöst, bevor sie zum ersten Mal benutzt wird.

8. Eine Methode erstmaliger Datenspeicherung in eine Speicherkarte (2) laut dem Anspruch 7 ist dadurch charakterisiert, dass im letzten Schritt der Datenverarbeitung in einer Maschine ein Befehl, die leitende Verbindung (8) mit Hilfe des Trennschalters (10) zu beenden, in die Speicherkarte (2) gesendet wird.

9. Eine Methode erstmaliger Datenspeicherung in eine Speicherkarte (2) laut dem Anspruch 7 ist dadurch charakterisiert, dass der Trennschalter (10) nach dem ersten Einstecken der Speicherkarte (2) in den Slot des mobilen Kommunikationsgeräts (4) die leitende Verbindung (8) trennt.

## Revendications

1. Support d'une carte-mémoire sous forme d'une carte plate (1) avec une carte mémoire attachée temporairement, où la carte plate (1) a un champ de contact (6) accessible à la surface de la carte plate (1) ;
et où la carte-mémoire (2) constitue un élément qui peut être retiré du corps de la carte plate (1),
la carte-mémoire (2) possède une interface de contact (7) permettant une connexion avec les circuits d'appareils de communication mobile (4), et la carte-mémoire (2) est spécialement indiquée pour les applications de paiement avec des données et/ou programmes préalablement chargés
**caractérisé en ce que**
la carte-mémoire (2) est connectée au corps de la carte plate (1) sur au moins une bande de connexion (5) dans une ligne de sortie (3),
le support englobe une connexion conductrice (8) qui relie le champ de contact (6) de la carte plate (1) aux circuits de la carte-mémoire (2) tandis que la connexion conductrice (8) traverse la ligne de sortie (3),
la connexion conductrice (8) traverse la bande de connexion (5),
la carte-mémoire (2) est équipée d'un déconnecteur (10) de connexion conductrice (8) qui est relié à la connexion conductrice (8) entre la ligne de sortie (3) et les circuits de la carte-mémoire (2);

2. Support de carte-mémoire, conformément à la revendication n°1, **caractérisé en ce que** la bande de connexion (5) avec connexion conductrice (8) se trouve hors de la bordure adjacente à l'interface de contact (7).

3. Support de carte-mémoire conformément aux revendications 1 ou 2, **caractérisé en ce que** le champ de contact (6) correspond au champ de contact de la carte à circuit intégré standard grâce à sa situation sur la carte plate (1) et par la disposition des contacts.

4. Support de carte-mémoire conformément aux revendications 1 à 3, **caractérisé en ce qu'**il est équipé d'une feuille (9) placée sur le côté où se trouve l'interface de contact (7) de la carte-mémoire (2), la feuille étant placée de sorte à couvrir l'interface de contact (7), celui-ci se trouvant en dehors du champ de contact (6) de la carte plate (1).

5. Support de carte-mémoire conformément à la revendication 4 **caractérisé en ce que** la feuille (9) possède une perforation (12) de telle sorte que la feuille (9) peut être partiellement brisée en l'enlevant de la surface du support.

6. Support de carte-mémoire conformément aux revendications 4 ou 5, **caractérisé en ce que** la feuille (9) possède une fenêtre (11) située sur le champ de contact (6).

7. Méthode de premier stockage de données sur la carte-mémoire (2) au moyen d'une machine de stockage de données conçue pour le stockage des données sur des cartes à circuit intégré standard ; en particulier pour le stockage des données d'applications de paiement, auquel cas les données sont stockées au moyen d'une machine fonctionnant à l'aide d'une carte plate (1) avec champ de contact (6), sachant que le champ de contact (6) est différent de l'interface de contact (7) de la carte-mémoire (2), **caractérisé en ce que** en présence de le support de carte-mémoire tel que défini dans l'une quelconque des revendications 1 à 6, la machine dessinant sur le support de carte utilisant des unités d'insertion standard,
après que la carte plate (1) a été mise dans la machine, les contacts du lecteur de cette dernière sont mis en rapport avec le champ de contact (6),
et la carte-mémoire (2) est éjectée et / ou libérée de la carte plate (1) la plus grande après les données ont été stockées et après que la carte plate (1) a été ôtée de l'appareil de stockage des données ; il vaut mieux que l'utilisateur de la carte-mémoire (2) enlève celle-ci manuellement avant de l'utiliser pour la première fois.

8. Méthode de stockage des premières données sur la carte-mémoire (2) selon la revendication 7, **caractérisé en ce qu'**au dernier stade d'insertion des données dans la machine, l'ordre de terminer la connexion conductrice (8) au moyen d'un déconnecteur (10) est envoyé à la carte-mémoire (2).

9. Méthode de stockage de premières données sur la carte-mémoire (2) selon la revendication 7, **caractérisé en ce que** le déconnecteur (10) déconnecte la connexion conductrice (8) après la première insertion de la carte-mémoire (2) dans la fente de l'appareil de communication mobile (4).
